# EUROPEAN PATENT SPECIFICATION

(11) **EP 3 227 513 B1**
(45) Date of publication and mention of the grant of the patent: **27.03.2019**
(21) Application number: 15805466.8
(22) Date of filing: 04.12.2015
(51) Int. Cl.: E04H 17/16, E04H 17/18, E04H 17/14, F16B 2/12, F16B 7/04, F16B 41/00

(54) **FENCE PANEL COUPLER**
ZAUNPLATTENVERBINDER
CONNECTEUR DE PANNEAU DE CLÔTURE

(30) Priority: 05.12.2014 GB 201421708
(43) Date of publication of application: 11.10.2017
(73) Proprietor: Ashe Limited, Ipswich, Suffolk IP7 5BB (GB)
(72) Inventor: BROWN, Robert Charles, Ipswich Suffolk IP7 5BB (GB)
(74) Representative: Dummett Copp LLP
(86) International application number: PCT/EP2015/078706
(87) International publication number: WO 2016/087659

(56) References cited:
- WO-A1-2004/083572
- DE-U1-202008 008 050
- GB-A- 643 565
- GB-A- 2 473 876
- JP-A- 2008 291 464
- US-A1- 2008 038 048

## Description

### FIELD OF THE INVENTION

The present invention relates to a fence panel coupler, an assembly comprising a fence panel coupler secured between a first fence panel and an adjacent second fence panel and a method of coupling a first fence panel to an adjacent second fence panel.

### BACKGROUND TO THE INVENTION

Temporary security fences, widely used to surround building sites, construction sites and concert venues, provide a low-security barrier against trespassers. These fences consist of a series of vertically aligned parallel poles positioned at a set separation distance in accordance with safety regulations along the outer bounds of the area wishing to be protected. In order to set up such a barrier, these vertically aligned parallel poles must be secured into place.

There currently exists a two-fold technique to ensure the stability of a temporary fence. Initially, a rubber footing shared by adjacent fence poles is positioned to establish support at the fence pole foundations, followed by the fitting of temporary fence couplers for the purpose of providing a stronger connection between two adjacent fence poles. These fence couplers are generally clamping devices, and comprise several components, including a first and second plate, a separate bolt and separate nut together with a washer. In fitting such a temporary clamp, the first and second plates must initially be manually held around adjacent fence poles before being secured together with the bolt, nut and washer.

These fence couplers include a number of discrete components and there is a high risk that some of these components may be lost during or after use. This will render the given clamp unusable. Most companies will order only the exact number of parts required and this may cause problems if some of the components have gone missing during or after installation or during transit.

The size of such bolts, nuts and washers are small enough that losing them can be an easy task, especially when assembling temporary fences in poor weather conditions that make for highly windy and muddy environments. These temporary fences may also be tampered with once assembled, which may lead to the unscrewing of clamps and individual bolts, nuts and washers being dislodged, displaced and/or stolen.

In addition, the fence couplers place a high burden on time and hence cost when a temporary fence is being erected. The temporary fence coupling devices require at least two people to fit every clamp to every fence pole (or every pair of adjacent fence poles) as a result of the various involved components. In particular, one person holds the two plates together and restrains the head of the connecting bolt on one side of the fence whilst another person is positioned on the opposite side in order to position the washer and to then tighten the nut on the bolt in order to secure the coupler to the adjacent poles.

During the installation of a typical temporary perimeter fence, the numbers of poles to be secured is generally quite high and since the fitting of the couplers is generally a two-person job, such an activity is time consuming and labour intensive. Furthermore, the time taken to sort through and distribute these individual components on site to every two people fitting a clamp can provide an additional time-consuming activity.

JP 2008 291464 discloses a fence connector having a base plate and a stiffening plate. A fastener fastens the base plate to the stiffening plate to clamp and fix two vertical frames together. The fastener includes a bolt which penetrates holes in the base plate and the stiffening plate. The connector includes a nut engaged with the bolt and a fall preventing means for the nut.

GB 643 565 provides a clamp for releasably securing together fishing nets to their supporting buoys or for securing together cables, wires, ropes and the like. The clamp comprises a pair of complementary half-sections which are hingedly connected together by means of a pin. The opposing surfaces of the half-sections are formed with complementary recesses which define circular openings or bores when the two half-sections are in abutment.

DE 20 2008 008050 discloses a device for clamping and fixing tubular elements which includes a connection element for connection to a wall and a clamping element for establishing a connection with the tubes.

WO2004/083572 provides a connecting assembly for releasably coupling adjacent site perimeter fences. The assembly comprises two curved wing profiles to lie against the sides of the posts. The centres of the wing profiles can be tightened together by means of a screw bolt.

GB 2 473 876 discloses a barrier clamp for clamping to a control barrier comprising a first clamp member and a second clamp member. The clamp also includes restraining means (such as a nut and bolt) which connects the clamp members together.

US 2008/038048 provides a temporary fencing clamp for use in building fences. The clamp includes two clasp portions with one having an integral bolt retained therein and the other having an integral receiver into which the bolt is threaded for securing the clasp portions together for clamping two fence sections together.

It is an aim of the present invention to overcome at least one problem associated with the prior art whether referred to herein or otherwise.

### SUMMARY OF THE INVENTION

According to a first aspect of the present invention there is provided a fence panel coupler comprising:
a first clamping member;
a second clamping member; and
connecting means to enable the first clamping member and the second clamping member to be moved towards each other to clamp two adjacent fence panels to each other and to be moved away from each other to release the fence panel coupler from the adjacent fence panels,
wherein the connecting means connects the first clamping member to the second clamping member and the connecting means comprising limiting means to limit the separation distance between the first clamping member and the second clamping member and wherein the limiting means prevents the detachment of the first clamping member from the second clamping member and characterised in that:
   the fence panel coupler comprises attachment means in order to attach the fence panel coupler to at least one fence panel whilst the fence panel coupler is in an unclamped configuration.

Preferably the limiting means prevents or stops the first clamping member being entirely (completely) separable or disconnected from the second clamping member.

Preferably the limiting means prevents movement of the second and/or first clamping member along the connecting means to a disconnected position.

Preferably the limiting means sets a maximum separation distance beyond which the second clamping member cannot be moved.

Preferably the connecting means comprises a shaft and a corresponding engagement member. Preferably the engagement member is relatively movable along the shaft to adjust the separation distance between the first clamping member and the second clamping member. Preferably the limiting means prevents the movement of the engagement member along the shaft at a predetermined position which may be at the maximum separation distance and at which position the first clamping member is still preferably attached (and connected) to the second clamping member.

The shaft may comprise a threaded shaft and the engagement member may comprise a corresponding female threaded member and preferably comprises a nut.

Preferably the first clamping member is movable relative to the second clamping member in a first direction and a second direction. Preferably the first clamping member is movable towards the second clamping member to move the fence panel coupler from a released configuration to a clamped configuration. Preferably the first clamping member is movable away from the second clamping member to move the fence coupler from a clamped configuration to a released or unclamped configuration. Preferably the limiting means sets a maximum distance for which the first clamping member is movable away from the second clamping member.

Preferably the first clamping member and second clamping member are movable along the connecting means from the clamped position to an unclamped position.

Preferably the connecting means comprises a connecting member. Preferably the first clamping member and second clamping member are both mounted to the connecting member. Preferably the first clamping member and the second clamping member are both movable relatively along the connecting member.

Preferably the first clamping member is arranged to engage a head of the connecting member.

The connecting member may comprise a threaded shaft.

The connecting member may comprise an engageable head which may comprise a tamper proof engageable head. Preferably the connecting member is rotatable through the engagement of the engageable head. The engageable head may comprise a shaped or profiled surface for engagement with a corresponding tool.

Preferably the rotation of the head of the threaded shaft causes the second clamping member to be drawn towards the first clamping member.

Preferably the engageable head comprises a tamper proof head and the threaded shaft may only be rotated by engagement with a specific tool. Preferably the tamper proof head is arranged to inhibit the rotation of the connecting member and may prevent of engagement of the connecting member with an unsuitable tool. The engageable head may be integral with the threaded shaft and may be engageable by a user which may manipulate the shaft.

The connecting means may comprise a female threaded engagement member nut for engagement with the threaded shaft.

The female engagement member (nut) may comprise a female engagement member (integral nut) which may be concealed or shrouded within a clamping member (preferably the second clamping member). The female engagement member (nut) may comprise a female engagement member (embedded nut) which is embedded within the first clamping member or the second clamping member.

The first clamping member may comprise a first clamping plate comprising a recessed portion towards one end for receiving a part of a periphery of a fence post. Preferably the first clamping plate comprises two recessed portions located at either ends of the first clamping member wherein each recessed portion is arranged to receive a part of a periphery of a fence post. Preferably the recessed portions are parallel in order to receive two parallel and spaced apart fence posts. The recessed portions may comprise partially cylindrical surfaces.

Preferably the first clamping plate comprises a central region for engaging with the connecting means and a first lateral side for engaging with a first fence panel and a second lateral side for engaging with a second fence panel.

The first clamping plate may comprise four fingers which are arranged in a cross shape. Two fingers may project to a first lateral side and two fingers may project to a second lateral side.

The recessed portions may comprise partial cylindrical receiving recesses to engage around cylindrical fence posts.

The first clamping member may comprise a shroud in order to shroud the head of the threaded shaft.

The first clamping member may comprise a resilient material. The first clamping member may comprise a polymer.

The second clamping member may comprise a second clamping plate comprising a recessed portion towards one end for receiving a part of a periphery of a fence post. Preferably the second clamping plate comprises two recessed portions located at either ends of the second clamping member wherein each recessed portion is arranged to receive a part of a periphery of a fence post. Preferably the recessed portions are parallel in order to receive two parallel and spaced apart fence posts. The recessed portions may comprise partially cylindrical surfaces.

Preferably the second clamping plate comprises a central region for engaging with the connecting means and a first lateral side for engaging with a first fence panel and a second lateral side for engaging with a second fence panel.

The second clamping plate may comprise four fingers which are arranged in a cross shape. Two fingers may project to a first lateral side and two fingers may project to a second lateral side.

The recessed portions may comprise partial cylindrical receiving recesses to engage around cylindrical fence posts.

The second clamping member may comprise a shroud in order to shroud an end of the threaded shaft.

The second clamping member may comprise a resilient material. The second clamping member may comprise a polymer.

The fence panel coupler may comprise attachment means in order to attach the fence panel coupler to two fence panels whilst the fence panel coupler is in an unclamped configuration.

The attachment means may comprise magnetic means. The magnetic means may comprise at least one magnet provided on the first clamping member and/or the second clamping member in order for the clamping member to be magnetically attached to a fence panel. The clamping member may comprise a plurality of magnets. The clamping member may comprise two magnets. The clamping member may comprise four magnets. The magnets may be provided within the recessed portions of the clamping member. Preferably the magnets are embedded within the clamping member.

The attachment means may comprise a shaped portion of the clamping member which is arranged to grip around a periphery of a fence post. The shaped portion may provide a gripping portion which produces a physical attachment of the clamping member to a fence panel.

The gripping portion may comprise an entry region and a retaining region wherein the clamping member is arranged to be flexed to increase a gap of the entry region whilst being located and/or installed around a fence post and then for the clamping member to flex around the fence post in order to grip the fence post with the fence post being physically retained in the retaining region.

The attachment means may comprise an interference fit.

The attachment means may comprise a spring attachment device(s) or spring element(s) which is urged into engagement around at least a part of a periphery of a fence panel.

The attachment means may prevent the simple removal and/or detachment of the clamping member from a fence post.

Preferably the attachment means requires the flexing of a part of the clamping member in order to remove the clamping member from the fence panel.

Preferably the attachment means prevents or inhibits movement of the clamping member along a longitudinal direction of a fence post.

The attachment means may comprise an attachment finger. The attachment means may comprise a plurality of attachment fingers. The first clamping member may comprise a first attachment finger for a attaching to a first fence panel and a second attachment finger for attaching to a second fence panel.

The attachment finger(s) may engage around a part of the inner periphery of a fence post.

The attachment finger may engage around a part of the outer periphery of a fence post.

The fence post coupler may comprise a hand grip to enable the fence post coupler to be manually gripped. Preferably the hand grip enables a user to rotate the first clamping member relative to the second clamping member. The hand grip may enable a user to simultaneously rotate both the first clamping member and the second clamping member.

Preferably the hand grip enables a user to rotate at least a second clamping member following the insertion of the second clamping member through a gap located between a first fence panel and a second fence panel. The hand grip may be provided on the first clamping member.

Preferably the hand grip enables the second clamping member to be rotated through substantially 90° following the insertion of the second clamping member between the gap located between the first fence panel and the second fence panel. The hand grip may subsequently enable the first clamping member not inserted through the gap to be rotated through 90° in order to rotate the second clamping member from a perpendicular orientation relative to the first clamping member in order for the first clamping member to lie parallel with the second clamping member.

The second clamping member may be rotatable through 90° relative to the first clamping member. The second clamping member may be rotatable through 180° relative to the first clamping member.

The fence post coupler may comprise a rotation limiter to limit the rotation of the second clamping member relative to the first clamping member.

Preferably the rotation of the threaded shaft in a first direction causes the first clamping member to move relatively towards the second clamping member. Preferably the rotation of the threaded shaft in a second direction causes the second clamping member to relatively move away from the first clamping member.

The initial rotation of the threaded shaft may initially cause the second clamping member to rotate relative to the first clamping member and this rotation may cause the second clamping member to align in a parallel orientation with the first clamping member and the subsequent rotation of the threaded shaft causes the movement of the second clamping member towards the first clamping member.

Preferably the first clamping member and the second clamping member define a clamping gap therebetween. Preferably the first clamping member and the second clamping member define two clamping gaps therebetween. The first clamping gap is arranged to clamp around a part of a first fence panel and preferably around a first fence post and the second clamping gap may be arranged to clamp around a part of a second fence panel and preferably around a second fence post.

Preferably the first fence post is parallel relative to the second fence post. Preferably the first fence post and the second fence post are vertically supported and preferably extend in an upright orientation. Preferably the first fence post and the second fence post are supported within a foot. Preferably the foot sets and provides a pre-defined separation distance for the first fence post (or panel) and the second fence post (or panel).

The fence panel coupler may comprise bias means to bias the first clamping member away from the second clamping member. The bias means may urge the first clamping member away from the second clamping member. The bias means may maintain the first clamping member in engagement with the head of the threaded shaft and the second clamping member in engagement with the nut.

The bias means may comprise a spring and preferably comprises a helical spring. The helical spring may locate around the threaded shaft (connecting member).

The bias means may locate in a chamber. A first end of the bias means may engage a part of the first clamping member and a second end of the bias means may engage a part of the second clamping member.

According to a second aspect of the present invention there is provided a fence assembly comprising a first fence panel, a second fence panel and a fence panel coupler, the fence panel coupler comprising:
a first clamping member;
a second clamping member; and
connecting means to enable the first clamping member and the second clamping member to be moved towards each other to clamp the two adjacent fence panels to each other and to be moved away from each other to release the fence panel coupler from the adjacent fence panels,
wherein the connecting means connects the first clamping member to the second clamping member and the connecting means comprising limiting means to limit the separation distance between the first clamping member and the second clamping member and wherein the limiting means prevents the separation of the first clamping member from the second clamping member and characterised in that:
   the fence panel coupler comprises attachment means in order to attach the fence panel coupler to at least one fence panel whilst the fence panel coupler is in an unclamped configuration.

The or each fence panel may comprise a first pole, a second panel and a fencing (or barrier) structure located therebetween. The fencing (or barrier) structure may comprise a wire mesh structure.

The or each pole of each fence panel may be arranged to be upstanding from a support foot.

The assembly may comprise a support foot. The support foot may provide a foundation for supporting a first pole from a first fence panel and a second pole from a second fence panel. The support foot may dictate or set the separation gap between the adjacent fence panels.

According to a third aspect of the present invention there is provided a method of securing a first fence panel to an adjacent second fence panel, the method comprising clamping a fence panel coupler between the first fence panel and the second fence panel, the fence panel coupler comprising:
a first clamping member;
a second clamping member; and
connecting means to enable the first clamping member and the second clamping member to be moved towards each other and to be moved away from each other to release the fence panel coupler from the adjacent fence panels,
wherein the connecting means connects the first clamping member to the second clamping member and the connecting means;
the method characterised by:
attaching the fence panel coupler to at least one fence panel whilst the fence panel coupler is in an unclamped configuration;
moving the first clamping member towards the second clamping member of the fence panel coupler in order to clamp two adjacent fence panels to each other; and
limiting the separation distance between the first clamping member and the second clamping member and preventing the separation of the first clamping member from the second clamping member.

The method may comprise inserting the second clamping member through a gap provided between the first fence panel and the second fence panel. The method may comprise rotating the second clamping member. The method may comprise rotating the second clamping member to span the gap between the first fence panel and the second fence panel such that the second clamping member is orientated in a configuration which cannot be moved between the gap between the first fence panel and the second fence panel.

The method may comprise orientating the first clamping member and the second clamping member to locate on opposing sides of a pole of the first fencing panel and a pole of the second fencing panel.

The method may comprise attaching the fence panel coupler to one or (more) both fence panels prior to clamping the fence panel coupler to the fence panels.

### BRIEF DESCRIPTION OF THE DRAWINGS

The present invention will now be described by way of example only, with reference to the drawings that follow, in which:
Figure 1A is a perspective view of a preferred embodiment of a fence panel coupler in an unclamped and unattached configuration.
Figure 1B is a perspective view of a preferred embodiment of a fence panel coupler in an installed (attached) and clamped configuration.
Figure 1C is a front view of a preferred embodiment of a fence panel coupler in an installed (attached) and clamped configuration.
Figure 1D is a rear view of a preferred embodiment of a fence panel coupler in an installed (attached) and clamped configuration.
Figure 1E is a plan view of a preferred embodiment of a fence panel coupler in an installed (attached) and clamped configuration.
Figure 1F is a cross section of a preferred embodiment of a fence panel coupler in an installed (attached) and clamped configuration.
Figure 1G is a cross section of part of an end of a threaded shaft and nut showing an example of a non-cooperating notch.
Figure 1H is a cross section of part of an end of a threaded shaft showing another example of a non-cooperating notch.
Figure 1I is a cross section of part of an end of a threaded shaft showing a further example of a non-cooperating notch.
Figure 2 shows a second embodiment of a fence panel coupler and Figure 2A is a perspective view with the fence panel coupler in an unclamped and unattached configuration, Figure 2B is a perspective view, Figure 2C is a front view, Figure 2D is a rear view, Figure 2E is a plan view and Figure 2F is a cross section with the fence panel coupler in an installed (attached) and clamped configuration.
Figure 3 shows a third embodiment of a fence panel coupler and Figure 3A is a perspective view with the fence panel coupler in an unclamped and unattached configuration, Figure 3B is a perspective view, Figure 3C is a front view, Figure 3D is a rear view, Figure 3E is a plan view and Figure 3F is a cross section with the fence panel coupler in an installed (attached) and clamped configuration.
Figure 4 shows a fourth embodiment of a fence panel coupler and Figure 4A is a perspective view with the fence panel coupler in an unclamped and unattached configuration, Figure 4B is a perspective view, Figure 4C is a front view, Figure 4D is a rear view, Figure 4E is a plan view and Figure 4F is a cross section with the fence panel coupler in an installed (attached) and clamped configuration.
Figure 5 shows a fifth embodiment of a fence panel coupler and Figure 5A is a perspective view with the fence panel coupler in an unclamped and unattached configuration, Figure 5B is a perspective view, Figure 5C is a front view, Figure 5D is a rear view, Figure 5E is a plan view and Figure 5F is a cross section with the fence panel coupler in an installed (attached) and clamped configuration.
Figure 6 shows a sixth embodiment of a fence panel coupler and Figure 6A is a perspective view with the fence panel coupler in an unclamped and unattached configuration, Figure 6B is a perspective view, Figure 6C is a front view, Figure 6D is a rear view, Figure 6E is a plan view and Figure 6F is a cross section with the fence panel coupler in an installed (attached) and clamped configuration.
Figure 7 shows a seventh embodiment of a fence panel coupler and Figure 7A is a perspective view with the fence panel coupler in an unclamped and unattached configuration, Figure 7B is a perspective view, Figure 7C is a front view, Figure 7D is a rear view, Figure 7E is a plan view and Figure 7F is a cross section with the fence panel coupler in an installed (attached) and clamped configuration.
Figure 8 shows a yet further embodiment of a fence panel coupler and Figure 8A is a perspective view in an unclamped and unattached configuration, Figure 8B is a cross section of the fence panel coupler in a clamped configuration and Figure 8C is a cross section in an unattached and unclamped configuration.
Figure 9 shows another further embodiment of a fence panel coupler and Figure 9A is a cross section in a clamped configuration, Figure 9B is a cross section in an unattached and unclamped configuration, Figure 9C is a perspective view from in front in an unclamped and unattached configuration and Figure 9D is a perspective view from the rear in an unclamped and unattached configuration.

### DESCRIPTION OF THE PREFERRED EMBODIMENTS

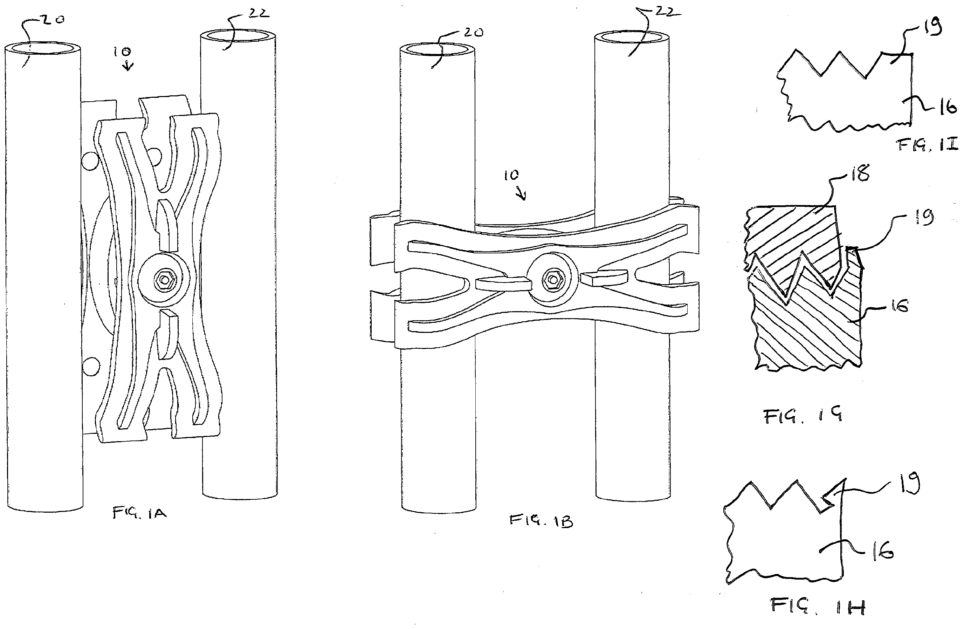

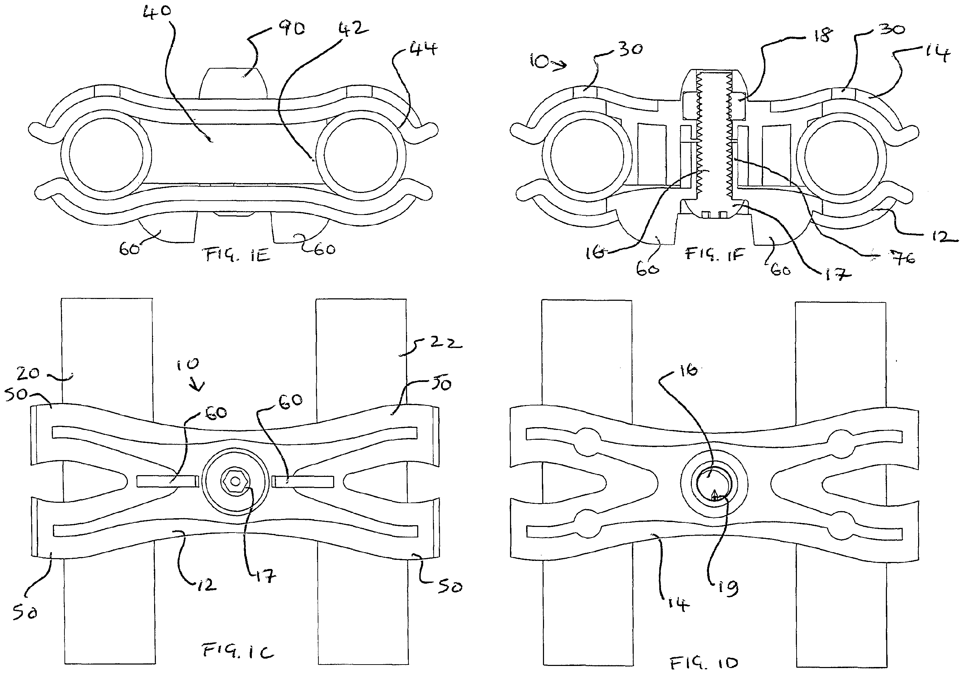

As shown in Figure 1, a preferred embodiment of a fence panel coupler 10 comprises a first clamping member 12, a second clamping member 14 and clamping means to connect the first clamping member 12 to the second clamping member 14.

The clamping means is arranged to enable the first clamping member 12 to be moved towards or away from the second clamping member 14 in order for the fence panel coupler 10 to be releasably clamped to a fencing structure. In particular, the fence panel coupler 10 is arranged to secure a fence post (or pole) 20 of a first fence panel to an adjacent second post (or pole) 22 of a second fence panel.

The present invention is specifically for use with temporary fencing panels which are used to construct temporary fences around at least a part of a perimeter of a site. For example, such perimeter fencing is used in or on building sites to deter unauthorised access. Such perimeter fences are not full security fences since they can be relatively easily breached.

A typical fencing panel comprises a first lateral pole and a second lateral pole with a wire mesh structure spanning therebetween. The lateral poles 20, 22 are arranged to be supported within supporting feet and to be upstanding therefrom in order for the fence panels to stand upwardly therefrom. Accordingly, such fencing can be relatively quickly and easily installed on hard surfaces to provide a temporary perimeter fence. The support feet include a sleeve portion into which the bottom end of a fence post can be inserted. Each support foot includes at least two cylindrical supporting apertures in order to support two fence posts at a predetermined spacing. In particular, a single support foot will support a fence post from a first fence panel adjacent to a fence post of a second fence panel at this predetermined spacing.

Each fence panel projects upwardly from the support feet to a height which may be in the region of 2 metres. Since the cylindrical supporting apertures are relatively shallow, it is relatively easy for these fence panels to be deflected and tilted within the support feet. Accordingly, fence panel couplers are used to stabilise and secure adjacent fence panels to each other in a co-planar arrangement in order to strengthen the temporary perimeter fencing and to prevent easy access between adjacent fence panels. The adjacent fence posts may be secured by two fence couplers along the length thereof.

A fence coupler typically consists of a first clamping member, a second clamping member and a threaded shaft connecting these two clamping members. This threaded shaft has a nut located at one end such that the threaded shaft is rotated relative to the nut to attach the two clamping members and to subsequently move the clamping members to a clamped position.

During the installation of the perimeter fencing, a first person is located on a first side of the perimeter fencing and a second person is located on the second side of the perimeter fencing. The first person then actuates one clamping member and the associated threaded shaft whilst the second person operates the second clamping member and the nut. As mentioned previously, such an operation can be relatively time consuming due to the construction requiring two individuals.

The present invention provides a fence panel coupler which can be operated by a single person located on one side of the perimeter fencing.

The fence panel coupler 10 comprises a first clamping member 12 which is permanently attached to the second clamping member 14 such that the two clamping members 12, 14 cannot be released from each other. The fence panel coupler is therefore a self contained element with no detachable components. The fence panel coupler 10 is preassembled and the first clamping member 12 is inseparable from the second clamping member 14.

The preferred embodiment of a fence panel coupler 10 comprises a threaded shaft 16 with a tamper proof head 17 which is engaged with an embedded nut 18 (or other female engagement member, for example a threaded insert or threaded sleeve surface). As shown in Figure 1F, the embedded nut 17 is arranged to be embedded within the second clamping member 14 whilst the tamper proof head 17 of the threaded shaft 16 is engaged with the first clamping member 12. The fence panel coupler 10 is arranged to be manually operated using a tamper proof tool which engages with the tamper proof head 17.

In a preferred embodiment, the tamper proof head 17 comprises an engagement aperture for an Allen key device having a head with a central recess such that the external surface for the Allen key engages within the tamper proof head whilst a central pin projects into the end of the Allen key. Such a tamper proof head prevents the engagement of the threaded shaft 16 with a conventional Allen key. The tamper proof head thereby provides a further level of security although it is appreciated that this would not prevent a planned attempt to breach the perimeter fencing.

The fence panel coupler 10 is arranged to be installed by a single person from one side of the perimeter fencing. The user inserts and moves the second clamping member 14 through the gap between the adjacent fence poles 20, 22, as shown in Figure 1A. The user then twists or rotates the complete fence coupler through 90° such that the two clamping members 12, 14 located on opposite sides of the fence poles 20, 22. In this position, the fence panel coupler 10 is attached to the fence poles through the attachment means comprising magnets 30. In particular, there are four individual magnets 30 embedded within the internal surfaces of the second clamping member 14 and this effectively attaches the second clamping member 14 to both poles 20, 22. This magnetic attachment supports the fence panel coupler 10 and prevents the fence panel coupler 10 dropping down the fence poles 20, 22 through the action of gravity.

In this embodiment, a further attachment force may also be generated through the spring action or snap fit between an outer surface 42 of a central block 40 of the second clamping member 14 and an opposing inner surface 44 of an attachment finger 50 of the second clamping member 14, as shown in Figure 1E. These opposing surfaces 42, 44 may effectively grip around the associated fence post 20, 22 and provide a positive gripping action or interference fit around the periphery of the fence post 20, 22. This provides a positive mechanical fitting to supplement the magnetic fitting. Some embodiments may only have one of these fittings or possibility no such gripping force.

Once attached in this unclamped configuration, a user will have both hands free. The user can then use the dedicated tool to tighten and rotate the threaded shaft 16 such that the clamping members 12, 14 move towards each other and clamp onto both poles 20, 22. Once tightened sufficiently, the user is then able to install further fence panel couplers 10. The fence panel coupler 10 includes a top or abutment to prevent the over-tightening of the bolt 16.

The fence panel coupler 10 is provided with gripping means in the form of a hand grip 60. This hand grip 60 may comprise flanges which are easily gripped by the hands of a user and aid the twisting/rotation and/or manipulation of the fence panel coupler 10 and the clamping members 12, 14.

The fence panel coupler 10 includes separation prevention means such that the second clamping member 14 is never released or disconnected from the first clamping member 12. This prevents the fence panel coupler 10 separating into several parts or components which will inevitably become lost or dropped into the dirt.

The release prevention means comprises limiting means to limit the separation distance between the first clamping member 12 and the second clamping member 14. The limiting means prevents the separation (detachment) of the first clamping member 12 from the second clamping member 14. The limiting means comprises a notch 19 or lug or abutment which restricts the movement (and removal) of the threaded shaft 16 from the corresponding nut 18. In particular, this notch 19 is provided on the end face of the threaded shaft 16 such that this notch 19 cannot be rotated through the nut 18. Accordingly, this limits the removal and detachment (or disconnection) of the threaded shaft 16 from the nut 18 and maintains the fence panel coupler 10 as a single element or component.

As shown in Figure 1G, a notch, lug or abutment 19 effectively disrupts the threads provided on the threaded shaft 16 such that the notch, lug or abutment 19 cannot be moved within the threaded surface (grooves/ridges) provided by the nut 18 or threaded insert 68. More specifically, this notch, lug or abutment 19 closes a part of the threaded groove defined within the outer surface of the threaded shaft 16 and prevents relative rotation of the threaded shaft 16 within the corresponding threaded surface. This means that the notch, lug or abutment cannot be rotated through the threaded surface of the nut 18 or threaded insert 68.

The notch, lug or abutment 19 is provided on an end face of the threaded shaft such that the notch, lug or abutment 19 closes or at least disrupts the end of the threaded surface located towards the end of the threaded shaft 16. For example, the notch, lug or abutment 19 may partially close one of the grooves of the threaded shaft 16 such that a corresponding ridge of the thread of the nut 18 or threaded shaft cannot pass/rotate through the groove. Similarly, the notch, lug or abutment 19 may provide a physical portion which cannot rotate through a groove of the thread of the nut 18 or threaded insert 68.

The threaded surface (grooves and ridges) may be formed on the shaft 16 as usual. The notch (lug or abutment) 19 may be formed afterwards by cutting into the threaded surface or deforming the threaded surface at or towards the end of the shaft 16. This may be formed after the nut 18 or threaded insert 68 is in position. As mentioned above, this is to create a portion which does not rotate within (or through) the corresponding threaded surface of the nut 18 or insert 68 such that the bolt 16 cannot then be removed or separated from the nut 18 or insert 68.

As it will be appreciated, any suitably shaped lug, abutment or notch 19 (examples are also shown schematically in Figure 1H and Figure 1I) may be used as long as this creates a portion which will not pass through the groove of the threaded surface of the nut 18 or threaded insert 68 or creates a portion which will not allow a groove of the threaded shaft 16 to pass therethrough.

The notch, lug or abutment is easily created by cutting or deforming the end face of the threaded shaft and specifically towards the periphery of the end face such that this disrupts and deforms the threaded grooves/ridges located adjacent to the end of the threaded shaft. These grooves and ridges form the threaded surface on the outer cylindrical surface of the threaded shaft. Overall, the notch, lug or abutment is defined on the threaded surface of the threaded shaft such that the notch, luu or abutment portion is will strike, hit or abut a part of the corresponding threaded surface of the nut or insert such that relative rotation of the two corresponding threaded surface is not possible. The notch, lug or abutment may provide a narrowed groove portion in one of the threaded surfaces or an enlarged or misaligned ridge portion in one of the threaded surfaces such that a ridge of one threaded surface cannot move through (or even be squeezed through) the (deformed) groove of the other threaded surface.

In the preferred embodiment, the notch 19 is created by applying a force (with a relatively blunt edge) at the end edge of the threaded shaft which thereby cuts into the side edge and forces the material of the threaded shaft 16 to deform away from the cut which creates the disruption within the threaded grooves/ridges of the threaded shaft. In alternative embodiments, a lug/abutment member may be formed in or secured to an end edge of the shaft 16 such that this lug/abutment member cannot be rotated through the threaded surface of the nut 18 or insert 68. For example, a pin may be arranged to project outwardly from the outer surface of the threaded shaft which would not be rotatable through the nut 18 or threaded insert 68. The notch, lug or abutment 19 may be arranged to abut an end face of the nut 18 or threaded insert 68 to prevent the threaded shaft being rotated relative to the nut 18 or insert 68.

In prior art couplers, the nut can be removed from the threaded shaft and the movement of the nut along the shaft (and hence between the two clamping members) is not limited.

The removal of the fence panel coupler 10 is effectively the reverse of the installation process. The threaded shaft 16 is first rotated to move the clamping members 12, 14 away from each other and to loosen the two clamping members 12, 14. The magnets 30 and/or the biasing attachment surfaces 42, 44 will still attach the fence panel coupler 10 to the perimeter fencing. Once in an unclamped position, the user will be able to remove the second clamping member 14 through the release of the magnets 30 and/or the gripping force from the fence poles 20, 22 and then rotate the fence panel coupler 10 such that the second clamping member 14 can be removed from between the gap between the adjacent fence panels.

Each clamping member 12, 14 essentially comprises a plate and in this embodiment each plate has two fingers extending laterally outwards from a central position. This forms a cross-shaped plate in which the fingers bifurcate. The extension of the fingers may be provided with shaped edges to help a user release them from around the periphery of a fence pole. This can be especially useful if the fingers are arranged to clip around the fence pole. Each clamping member is symmetrical about a central axis. The fingers are arranged to clip around a part of the respective fence poles.

The clamping members 12, 14 have partially cylindrical recessed portions for engaging around at least a part of a periphery of a fence pole. In particular, each clamping member 12, 14 may have two parallel channels for receiving the two adjacent fence poles. The shape, size and separation distance of these two channels is well known since the fence panels have standard sizes. In addition, safety regulations may dictate and set the spacing at the gap between the fence panels and this will also be set by the support foot.

The fence panel coupler 10 also has shrouds to at least partially conceal the ends of the threaded shaft 16. The end 16 of the threaded shaft 16 may be surrounded by a first shroud 90 whilst the head 17 of the threaded shaft 16 may be provided within a recessed portion of the first clamping member 12. These shrouds may hinder or prevent an unauthorised person from using a gripping tool to grip the threaded shaft 16, head 17 or even nut 18. The fence panel coupler 10 effectively provides a bolt housing to conceal and protect the bold and/or nut.

The fence panel coupler 10 and, in particular, the clamping members may be manufactured from a glass filled polymer. The material may provide the required strength and also the flexibility.

During the installation, initially, a single fence pole may be inserted into a respective recess. The fence panel coupler 10 may then be rotated about this fence pole in order for the second fence pole to be engaged within the second recessed portion. This action may be more restrained and limited when both fence poles are already secured by an earlier fence panel coupler. For this reason, any central block 40 may have suitably shaped edges and be of dimensions to enable this subsequent attachment relatively easily.

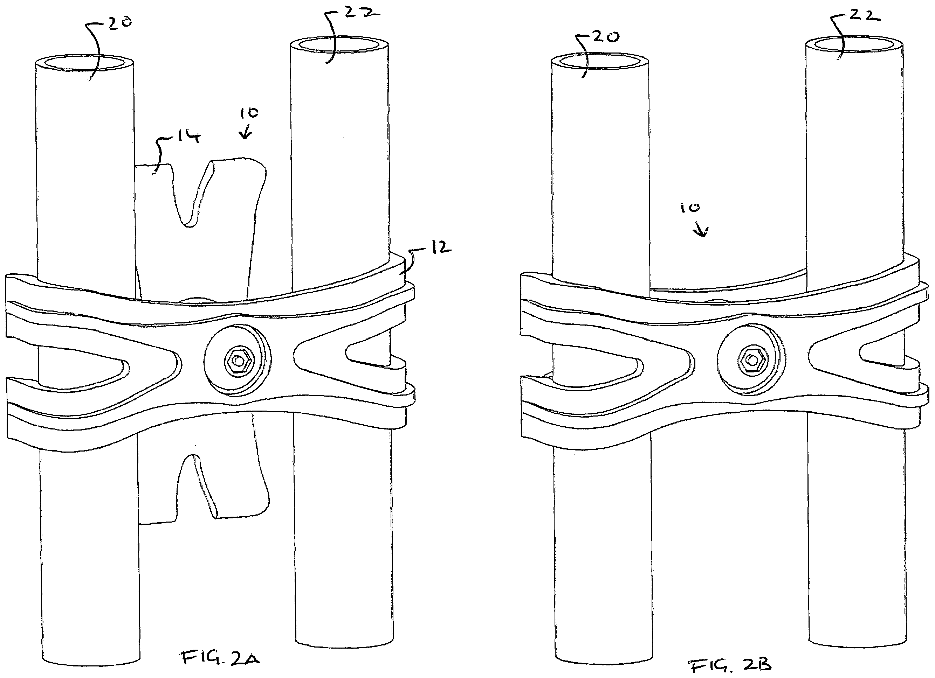

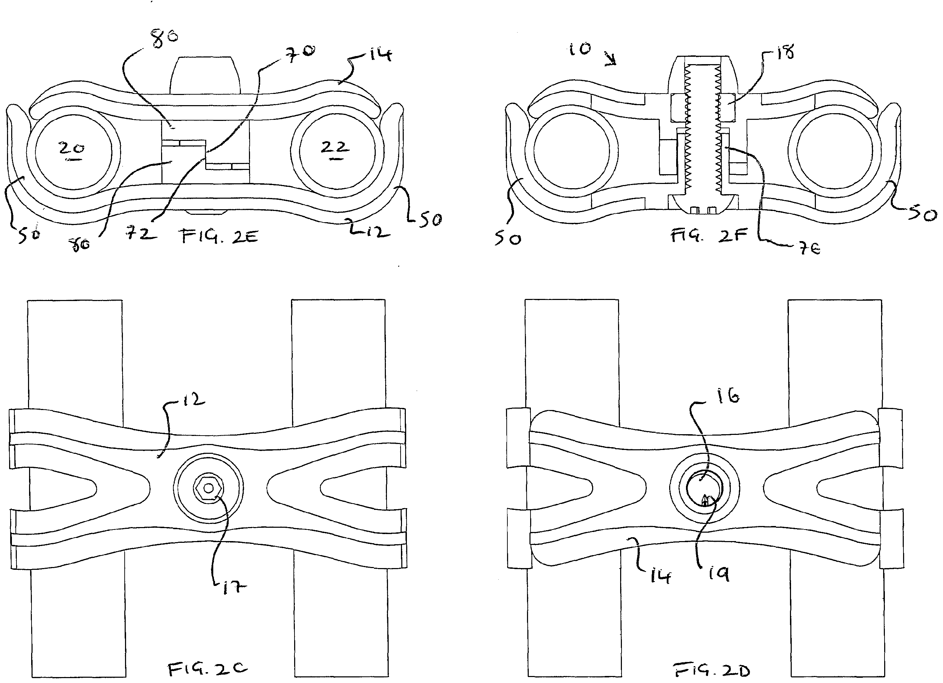

In a second embodiment, shown in Figure 2, the first clamping member 12 includes extended fingers 50 which engage around a part of the outer peripheries of the fence poles 20, 22. These extended fingers 50 may attach the fence panel coupler 10 to the poles 20, 22. However, this embodiment may not be suitable for use with fence panels having mesh or another panelling structure since this mesh is generally attached to these surfaces and would therefore prevent the extension of these fingers 50 around the periphery.

In this embodiment, a tool is again arranged to rotate the threaded shaft 16 as described above. However, the initial turn of the threaded shaft 16 is arranged to rotate the second clamping member 14 relative to the first clamping member from the cross or perpendicular configuration/position shown in Figure 2A to the aligned or parallel position shown in Figure 2B. The fence panel coupler 10 includes abutment means which prevents any further rotation of the two clamping members 12, 14 beyond this aligned position. In particular, the abutment means comprises two opposing abutment surfaces 70, 72 which limit the relative rotation. Any further rotation of the threaded shaft 16 causes the two clamping members 12, 14 to move towards each other and to clamp the two adjacent fence panels together.

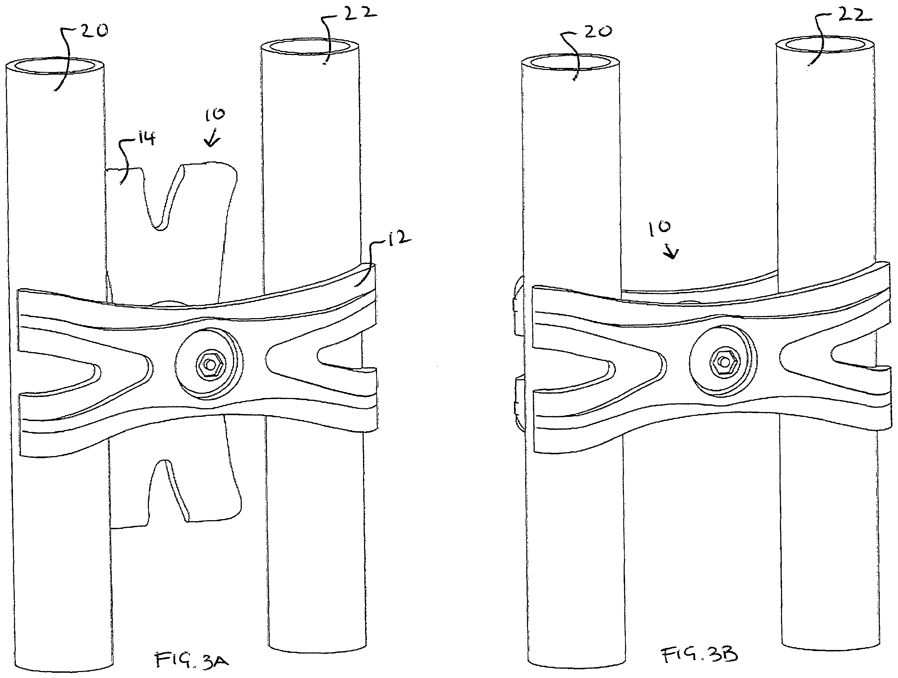

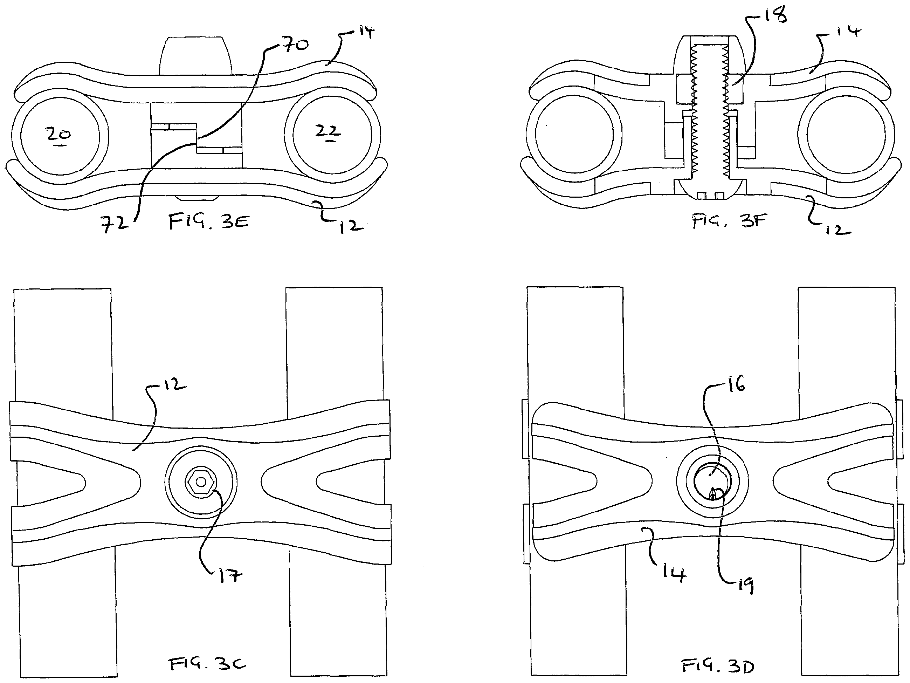

As shown in Figure 3, in a third embodiment, the fence panel coupler 10 is not provided with the added capability of being attached to the fence panels in an unclamped configuration. In this arrangement, the user would have to manually support the fence panel coupler 10 during the initial tightening and clamping of the device.

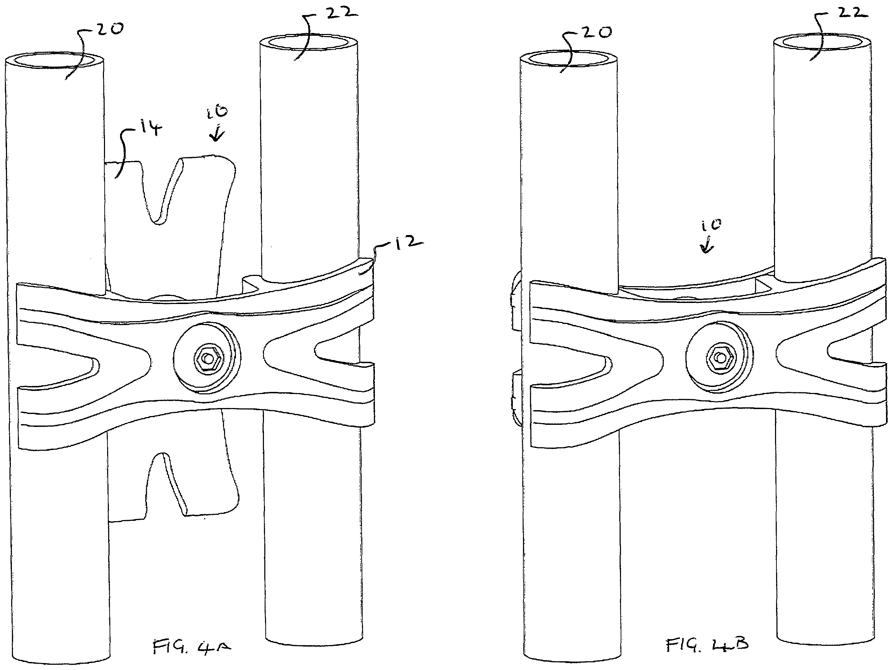

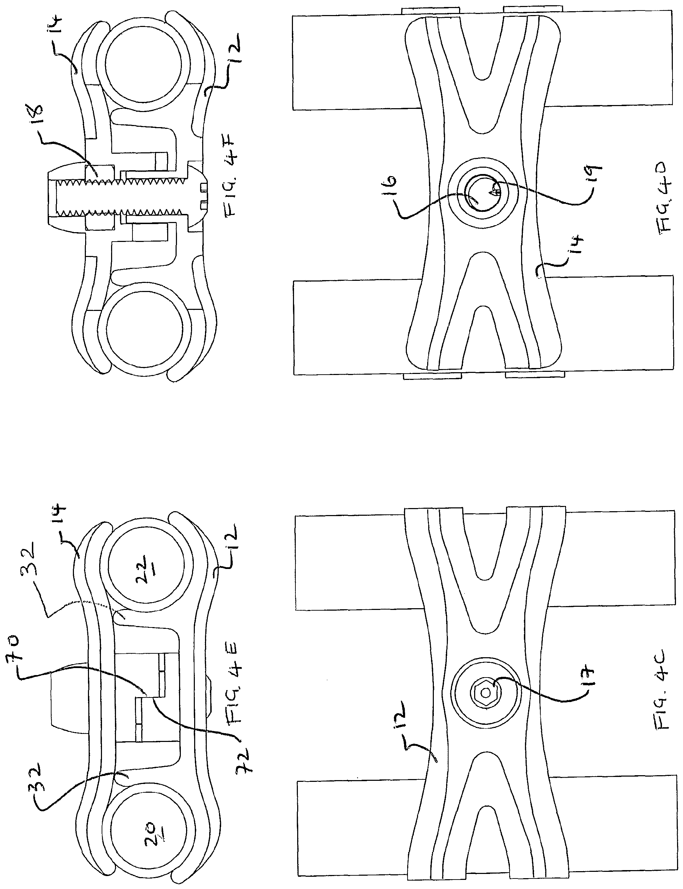

A further embodiment of the present invention, shown in Figure 4, includes internal attachment or gripping fingers 32 which engage on the internally facing (i.e. facing the gap between the adjacent panels) surfaces of the poles 20, 22. These gripping/attachment fingers create a positive gripping force together with opposing surfaces provided towards an end of the fingers of the first clamping member 12.

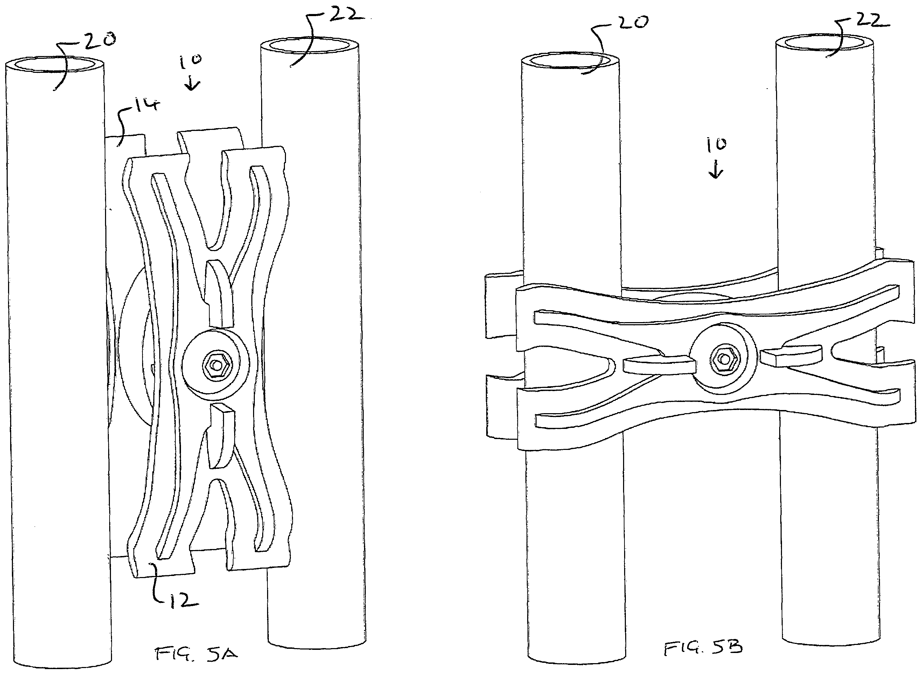

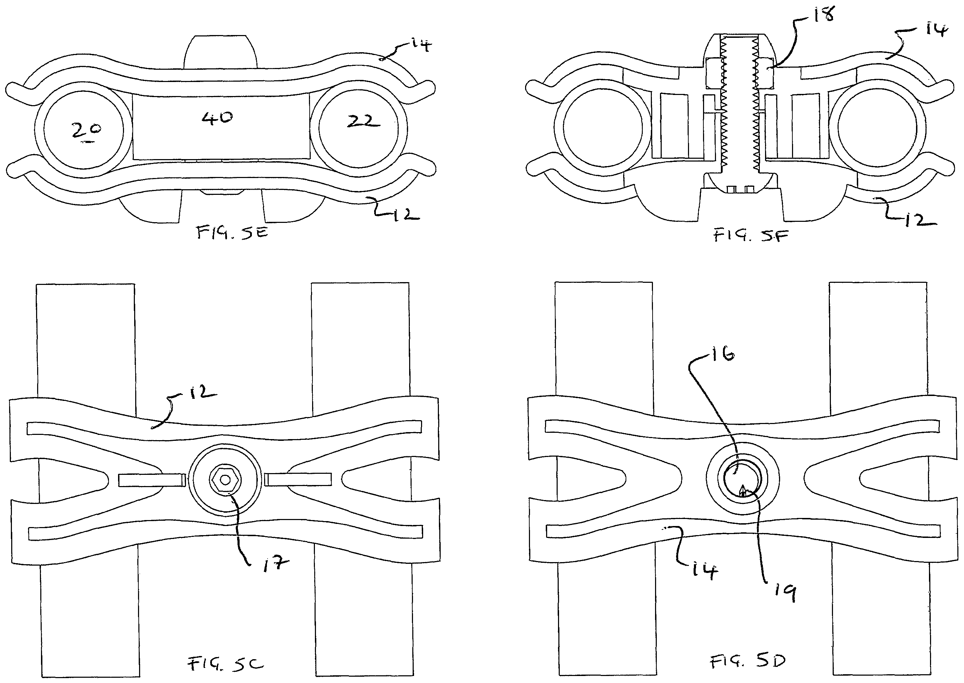

In a fifth embodiment, shown in Figure 5, the attachment means is provided by an internal block component 40 of the second clamping member 14 which creates a positive gripping force together with a part of the clamping recessed surface of the second clamping member 14.

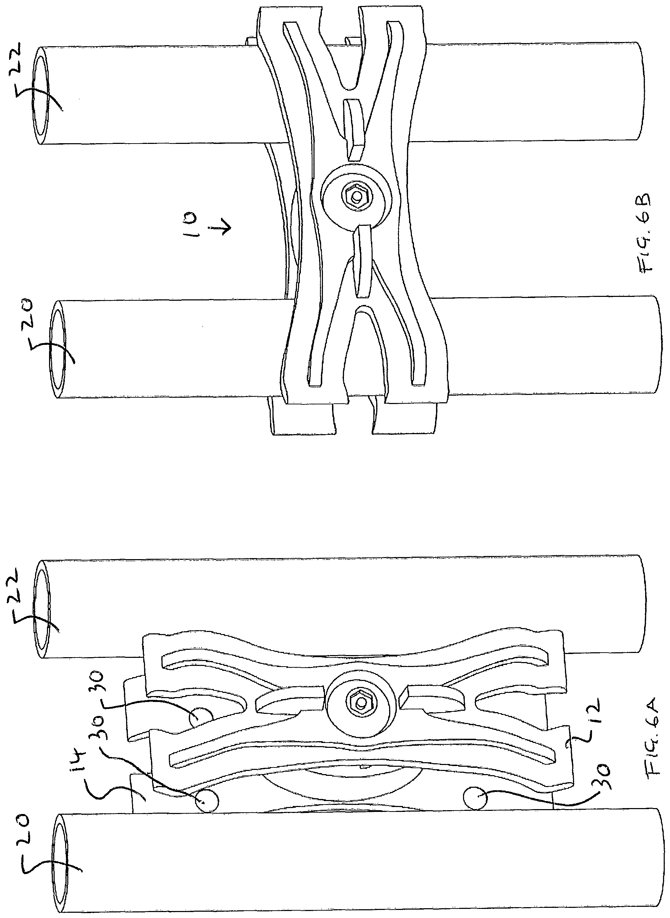

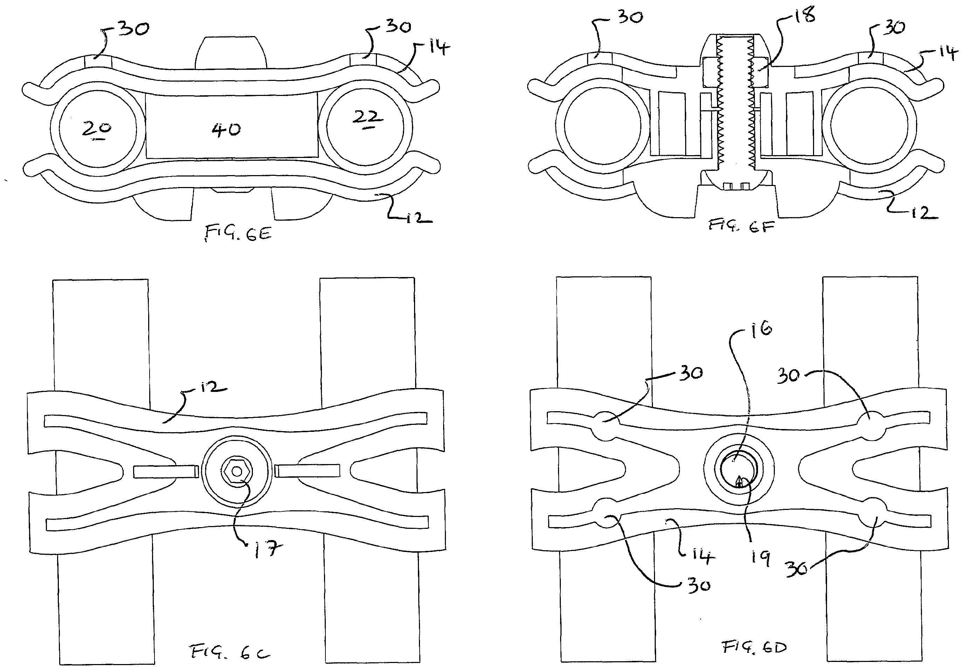

In a sixth embodiment, shown in Figure 6, the attachment means is provided by four individual magnets 30 located and secured on the second clamping member 14. Such fence panel couplers 10 would be primarily for use with metal fence panels of the type that are frequently and commonly used at building sites.

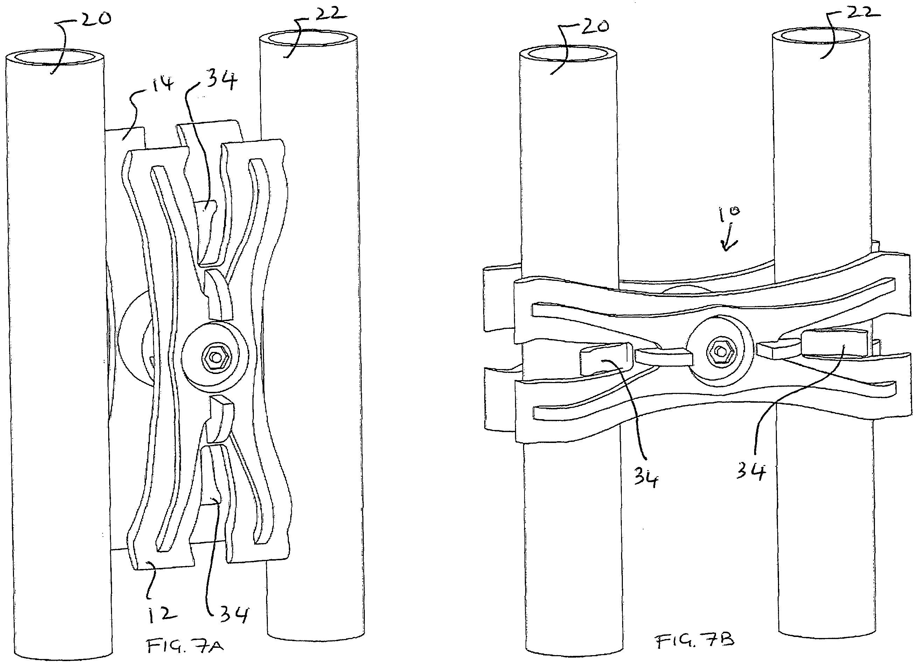

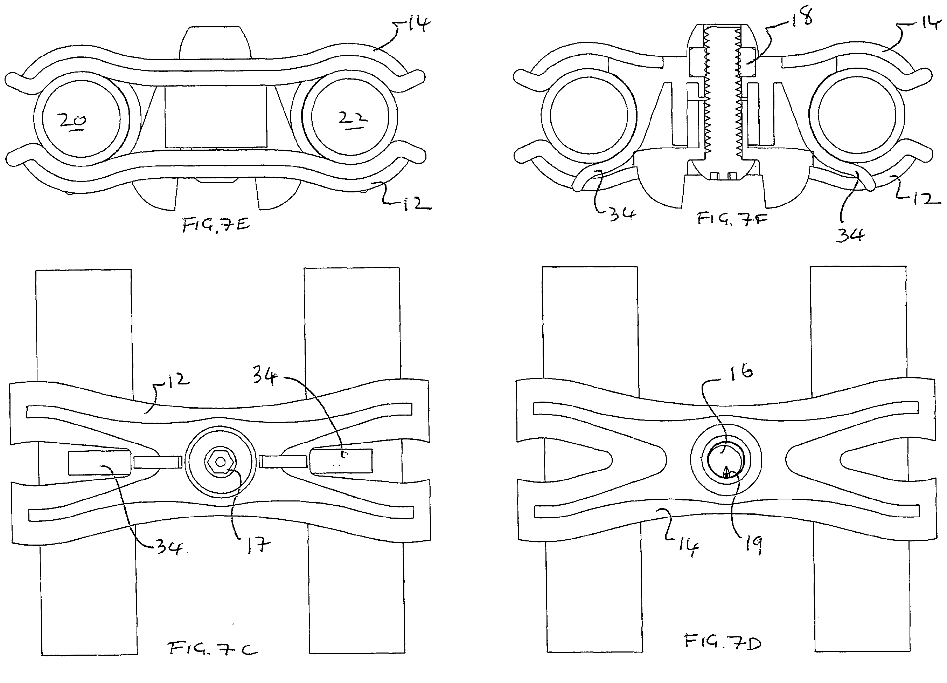

In a seventh embodiment, shown in Figure 7, the attachment means is provide by gripping fingers 34 provided on the second clamping member 14. These gripping fingers 34 create a positive gripping force (spring action) on either side of a pole 20, 22 of a fence panel.

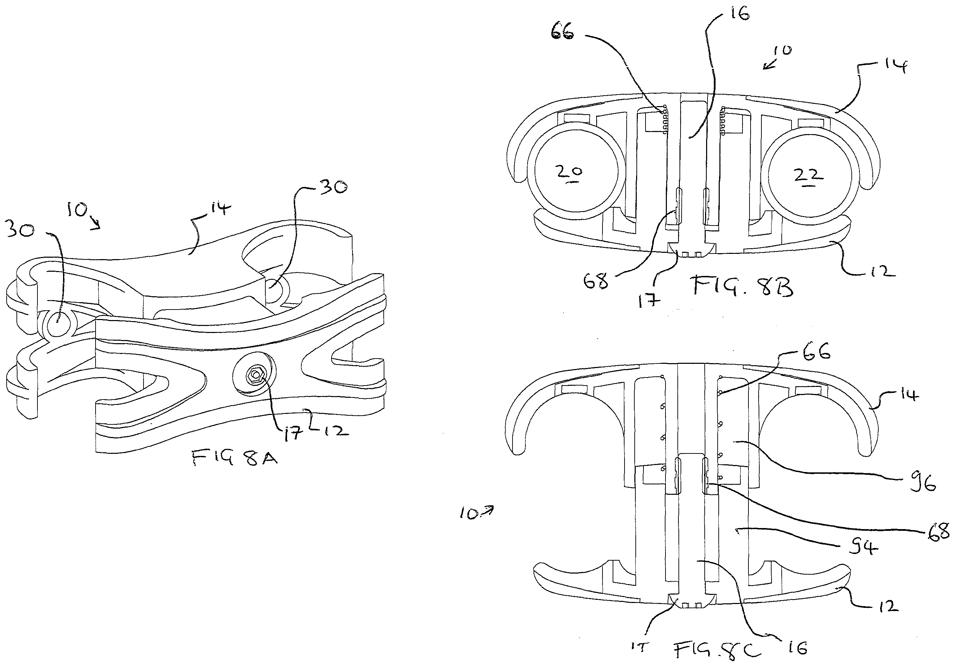

In a yet further embodiment, shown in Figure 8, the fence panel coupler 10 comprises bias means in the form of a helical spring 66 to bias and urge the clamping members 12, 14 away from each other. This can be particularly beneficial when releasing the fence panel coupler 10 from the two poles 20, 22. The second clamping member 14 comprises two button magnets 30 to attach the second clamping member 14 to the fence poles 20, 22.

From the installed position, as the threaded shaft 16 is rotated within the threaded insert 68 (or threaded sleeve surface) to release the fence panel coupler 10, the spring 66 will urge the first clamping member 12 away from the fence poles 20, 22. This will provide a visible gap and this will aid the user. This may be used to indicate when the threaded shaft 16 has been sufficiently rotated to create a gap large enough to remove the fence panel coupler 10.

The spring 66 is arranged to locate within an annular chamber which surrounds the bolt housing. One end of the spring 66 is engaged with the first clamping member 12 and the second end of the spring 66 is engaged with the second clamping member 14.

The first clamping member 12 is also provided with a sleeve section 94 which moves into and out of a corresponding annular gap 96 provided by the second clamping member 14. These corresponding parts 94, 96 restrain the two clamping members 12, 14 and ensure that both lateral sides part parallel to each other and not at an angle which could result in the plates becoming stuck during separation.

In this embodiment, the engagement member is provided by a threaded insert 68 or threaded surface which engages with the thread of the threaded shaft 16.

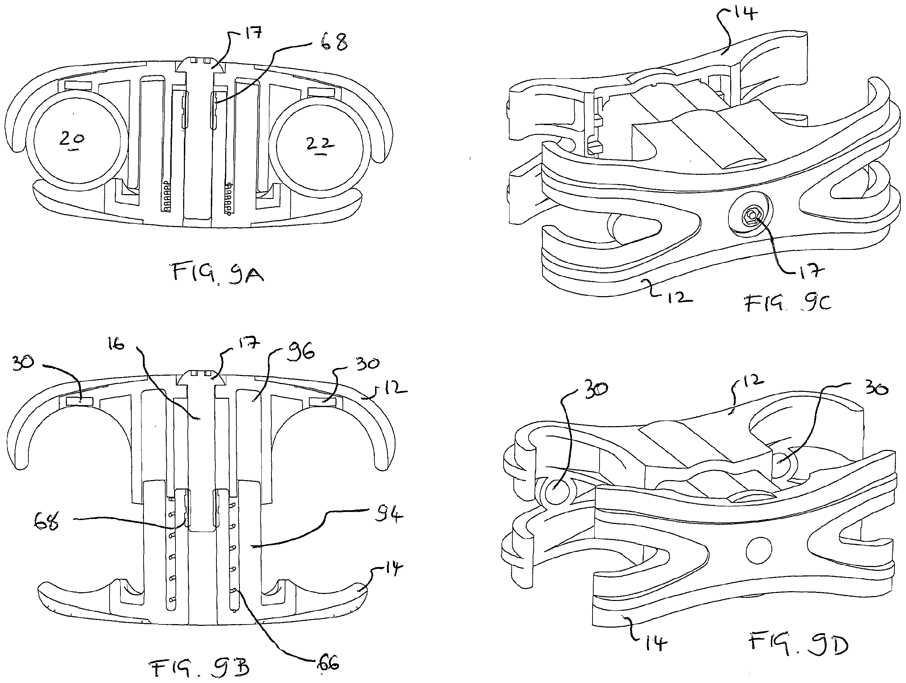

In another preferred embodiment, shown in Figure 9, the fence panel coupler 10 again comprises bias means in the form of a helical spring 66 to bias and urge the clamping members 12, 14 away from each other. This can be particularly beneficial when releasing the fence panel coupler 10 from the two poles 20, 22. The first clamping member 12 comprises two button magnets 30 to attach the second first member 14 to the fence poles 20, 22.

From the installed position, as the threaded shaft 16 is rotated within the threaded insert 68 (or threaded sleeve surface) to release the fence panel coupler 10, the spring 66 will urge the second clamping member 14 away from the fence poles 20, 22. This will provide a visible gap and this will aid the user. This may be used to indicate when the threaded shaft 16 has been sufficiently rotated to create a gap large enough to remove the fence panel coupler 10.

The spring 66 is arranged to locate within an annular chamber which surrounds the bolt housing. One end of the spring 66 is engaged with the second clamping member 14 and the second end of the spring 66 is engaged with the first clamping member 12.

The second clamping member 14 is also provided with a sleeve section 94 which moves into and out of a corresponding annular gap 96 provided by the first clamping member 12. These corresponding parts 94, 96 restrain the two clamping members 12, 14 and ensure that both lateral sides part parallel to each other and not at an angle which could result in the plates becoming stuck during separation.

In this embodiment, the engagement member is provided by a threaded insert 68 or threaded surface which engages with the thread of the threaded shaft 16.

This embodiment and modifications improve the usability of the device. Compared to the previous embodiment, the half 12 that clamps around the posts 20, 22 now houses the bolt 16 instead of the other way around. This allows the magnets 30 to hold the clamp 10 in place on the posts 20, 22 and when the user presses against the clamp 10 to turn the bolt 16 the user is further pressing the clamp 10 against the posts 20, 22. In the previous version, when pressing against the clamp 10 to do the bolt up the user would have been pushing on the half that was not magnetised to the posts 20, 22 and hence this may have pushed the clamp 10 off the posts 20, 22 during that operation.

In some embodiments, a hardened metal rod or wire (or other such reinforcement material/structure) moulded within the plastic to help prevent the clamp 10 being sawn through or similarly interfered with.

As it will be appreciated, there are many potential specific embodiments of the present invention in which the geometry of the parts will change but the principle of operation remains the same.

The present invention may use two plastic moulded main halves 12, 14, the rear half 14 has a nut 18 (or threaded insert 68) moulded within it and the two halves 12, 14 are secured with an anti-tamper bolt 16. The bolt 18 may be retained in the nut 18 which means that the plastic halves 12, 14 will never become separated. There is a dome of plastic 90 to protect the end of the bolt 16 once it has been tightened to help prevent someone gripping this thread and unscrewing it.

In some embodiments, the mouldings 12, 14 are preassembled at right angles to one another and the initial action of rotating the bolt 16 turns the back moulding 14 through 90 degrees before the continued rotation of the bolt 16 draws the two halves 12, 14 together. The geometry of a plastic hub 80 controls this rotating action so that it will always rotate in the correct direction, hit a stop 70, 72 and then be drawn in towards the other half.

In other embodiments, the moulded halves 12, 14 may be preassembled parallel to each other. They are manually turned through 90 degrees over the posts 20, 22 before the bolt 16 then simply draws the two halves 12, 14 together.

The central boss 76 may prevent over tightening of the bolt 16. In addition to the basic concepts a hardened rod or wire (not shown) may be assembled or moulded into the plastic along the long length to help prevent someone sawing the couplings 10 off the fence.

In summary, a first embodiment, includes magnets to help hold the mouldings 12, 14 in place as well as the rear moulding 14 being designed so that the posts 20, 22 are snapped into position between the flexible outer fingers and the curved outer profile of the central hub 40. In this concept, the posts 20, 22 may be held more robustly into the coupling 10 in the horizontal plane by the snap fit action and the magnets 30 hold it vertically so that the installation operation may be achieved as a one-handed assembly operation.

In a second embodiment, the fence panel coupler clips around the outsides of the posts 20, 22 and then the bolt 16 secures the coupler 10.

In the third embodiment, the coupler 10 has to be manually held onto the posts 20, 22 whilst the bolt 16 is tightened.

In the fourth embodiment, the coupler 10 clips to the insides of the posts 20, 22, then the bolt 16 secures the device.

In the fifth embodiment, the coupler 10 manually clips over the posts 20, 22 but is then loose vertically before the bolt 16 secures it in place.

In the sixth embodiment, magnets hold the moulding in place while the bolt 16 is secured.

In the seventh embodiment, plastic clips engage around the posts 20, 22 as the coupling is twisted into position.

In the final embodiments as shown in Figure 8 and Figure 9, the coupler 10 includes bias means in the form of a spring to urge the two clamping members 12, 14 apart to aid the removal of the coupler 10.

## Claims

1. A fence panel coupler (10) comprising:
a first clamping member (12);
a second clamping member (14); and
connecting means to enable the first clamping member (12) and the second clamping member (14) to be moved towards each other to clamp two adjacent fence panels to each other and to be moved away from each other to release the fence panel coupler (10) from the adjacent fence panels,
wherein the connecting means connects the first clamping member (12) to the second clamping member (14) and the connecting means comprising limiting means to limit the separation distance between the first clamping member (12) and the second clamping member (14) and wherein the limiting means prevents the detachment of the first clamping member (12) from the second clamping member (14) and **characterised in that**:
the fence panel coupler (10) comprises attachment means in order to attach the fence panel coupler (10) to at least one fence panel whilst the fence panel coupler (10) is in an unclamped configuration.

2. A fence panel coupler (10) according to Claim 1 in which the connecting means comprises a shaft (16) and a corresponding engagement member (18) and in which the engagement member (18) is relatively movable along the shaft (16) to adjust the separation distance between the first clamping member (12) and the second clamping member (14) and wherein the limiting means prevents the movement of the engagement member (18) along the shaft (16) at a predetermined position which is at the maximum separation distance and at which position the first clamping member (12) is still attached and connected to the second clamping member (14).

3. A fence panel coupler (10) according to Claim 1 or Claim 2 in which the first clamping member (12) is movable relative to the second clamping member (14) and the first clamping member (12) is movable towards the second clamping member (14) to move the fence panel coupler (10) from a released configuration to a clamped configuration and the first clamping member (12) is movable away from the second clamping member (14) to move the fence coupler (10) from a clamped configuration to a released or unclamped configuration and, in which, the limiting means sets a maximum distance for which the first clamping member (12) is movable away from the second clamping member (14).

4. A fence panel coupler (10) according to any preceding claim in which the connecting means comprises a threaded shaft (16) comprising an engageable tamper proof head (17).

5. A fence panel coupler (10) according to Claim 4 in which the connecting means comprises a threaded engagement member comprising a female threaded member (18) for engagement with the threaded shaft (16) and in which the female engagement member (18) is concealed within the second clamping member (14).

6. A fence panel coupler (10) according to any preceding claim in which the fence panel coupler (10) comprises attachment means in order to attach the fence panel coupler (10) to two fence panels whilst the fence panel coupler (10) is in an unclamped configuration.

7. A fence panel coupler (10) according to any preceding claim in which the attachment means comprises magnetic means (30).

8. A fence panel coupler (10) according to any preceding claim in which the attachment means comprises a shaped portion of the clamping member (12, 14) which is arranged to grip around a periphery of a fence post.

9. A fence panel coupler (10) according to any preceding claim in which the second clamping member (14) is rotatable through 90° relative to the first clamping member (12).

10. A fence panel coupler (10) according to any one of claim 1 to claim 8 in which the second clamping member (14) is rotatable through 180° relative to the first clamping member (12).

11. A fence panel coupler (10) according to any preceding claim in which the fence panel coupler (10) comprises a rotation limiter to limit the rotation of the second clamping member (14) relative to the first clamping member (12).

12. A fence panel coupler (10) according to any preceding claim in which the initial rotation of a threaded shaft (16) initially causes the second clamping member (14) to rotate relative to the first clamping member (12) and this rotation causes the second clamping member (14) to align in a parallel orientation with the first clamping member (12) and the subsequent rotation of the threaded shaft (16) causes the movement of the second clamping member (14) towards the first clamping member (12).

13. A fence panel coupler (10) according to any preceding claim in which the fence panel coupler (10) comprises bias means (66) to bias the first clamping member (12) away from the second clamping member (14).

14. A fence assembly comprising a first fence panel, a second fence panel and a fence panel coupler (10), the fence panel coupler (10) comprising:
a first clamping member (12);
a second clamping member (14); and
connecting means to enable the first clamping member (12) and the second clamping member (14) to be moved towards each other to clamp the two adjacent fence panels to each other and to be moved away from each other to release the fence panel coupler (10) from the adjacent fence panels,
wherein the connecting means connects the first clamping member (12) to the second clamping member (14) and the connecting means comprising limiting means to limit the separation distance between the first clamping member (12) and the second clamping member (14) and wherein the limiting means prevents the separation of the first clamping member (12) from the second clamping member (14) and **characterised in that**:
the fence panel coupler (10) comprises attachment means in order to attach the fence panel coupler (10) to at least one fence panel whilst the fence panel coupler (10) is in an unclamped configuration.

15. A method of securing a first fence panel to an adjacent second fence panel, the method comprising clamping a fence panel coupler (10) between the first fence panel and the second fence panel, the fence panel coupler (10) comprising:
a first clamping member (12);
a second clamping member (14); and
connecting means to enable the first clamping member (12) and the second clamping member (14) to be moved towards each other and to be moved away from each other to release the fence panel coupler (10) from the adjacent fence panels,
wherein the connecting means connects the first clamping member (12) to the second clamping member (14);
the method **characterised by**:
attaching the fence panel coupler (10) to at least one fence panel whilst the fence panel coupler (10) is in an unclamped configuration;
moving the first clamping member (12) towards the second clamping member (14) of the fence panel coupler (10) in order to clamp two adjacent fence panels to each other; and
limiting the separation distance between the first clamping member (12) and the second clamping member (14) and preventing the separation of the first clamping member (12) from the second clamping member (14).

## Patentansprüche

1. Zaunmattenverbinder (10), umfassend:
ein erstes Klemmelement (12);
ein zweites Klemmelement (14); und
ein Verbindungsmittel, welches ermöglicht, dass das erste Klemmelement (12) und das zweite Klemmelement (14) aufeinander zu bewegt werden können, um zwei benachbarte Zaunmatten miteinander zu verklemmen, und voneinander weg bewegt werden können, um den Zaunmattenverbinder (10) von benachbarten Zaunmatten zu lösen, wobei das Verbindungsmittel das erste Klemmelement (12) mit dem zweiten Klemmelement (14) verbindet und das Verbindungsmittel ein Begrenzungsmittel umfasst, um den Trennungsabstand zwischen dem ersten Klemmelement (12) und dem zweiten Klemmelement (14) zu begrenzen und wobei das Begrenzungsmittel verhindert, dass das erste Klemmelement (12) vom zweiten Klemmelement (14) gelöst wird, und der Zaunmattenverbinder (10) **dadurch gekennzeichnet ist, dass** er ein Befestigungsmittel umfasst, um den Zaunmattenverbinder (10) an wenigstens einer Zaunmatte anzubringen, während sich der Zaunmattenver-binder (10) in einem nicht geklemmten Zustand befindet.

2. Zaunmattenverbinder (10) nach Anspruch 1,
bei welchem das Verbindungsmittel eine Welle (16) und ein entsprechendes Eingriffselement (18) umfasst, und bei welchem das Eingriffselement (18) entlang der Welle (16) relativ zu dieser bewegt werden kann, um den Trennungsabstand zwischen dem ersten Klemmelement (12) und dem zweiten Klemmelement (14) einzustellen, und wobei das Begrenzungsmittel verhindert, dass sich das Eingriffselement (18) entlang der Welle (16) bis zu einer vorgegebenen Stelle bewegt, welche sich an dem maximalen Trennungsabstand befindet und an welcher Stelle das erste Klemmelement (12) immer noch an dem zweiten Klemmelement (14) angebracht und mit diesem verbunden ist.

3. Zaunmattenverbinder (10) nach Anspruch 1 oder Anspruch 2,
bei welchem das erste Klemmelement (12) relativ zum zweiten Klemmelement (14) bewegbar ist und das erste Klemmelement (12) in Richtung des zweiten Klemmelements (14) bewegbar ist, um den Zaunmattenverbinder (10) aus einem gelösten Zustand in einen Klemmzustand zu bewegen, und wobei das erste Klemmelement (12) vom zweiten Klemmelement (14) weg bewegbar ist, um den Zaunmatten-verbinder (10) aus einem Klemmzustand in einen gelösten oder nicht geklemmten Zustand zu bewegen, und bei welchem das Begrenzungsmittel einen Maximalabstand vorgibt, um welchen das erste Klemmelement (12) vom zweiten Klemmelement (14) weg bewegbar ist.

4. Zaunmattenverbinder (10) nach einem der vorigen Ansprüche,
bei welchem das Verbindungsmittel eine Gewindewelle (16) umfasst, welche einen angreifbaren manipulationssicheren Kopf (17) umfasst.

5. Zaunmattenverbinder (10) nach Anspruch 4,
bei welchem das Verbindungsmittel ein Eingriffselement mit Gewinde umfasst, welches ein weibliches Gewindeelement (18) zum Eingriff mit der Gewindewelle (16) umfasst, und bei welchem das weibliche Eingriffselement (18) innerhalb des zweiten Klemmelements (14) verborgen ist.

6. Zaunmattenverbinder (10) nach einem der vorigen Ansprüche,
bei welchem der Zaunmattenverbinder (10) ein Befestigungsmittel umfasst, um den Zaunmattenverbinder (10) an zwei Zaunmatten zu befestigen, während der Zaunmatten-verbinder (10) sich in einem nicht geklemmten Zustand befindet.

7. Zaunmattenverbinder (10) nach einem der vorigen Ansprüche,
bei welchem das Befestigungsmittel ein magnetisches Mittel (30) umfasst.

8. Zaunmattenverbinder (10) nach einem der vorigen Ansprüche,
bei welchem das Befestigungsmittel einen geformten Abschnitt des Klemmelements (12, 14) umfasst, welcher so angeordnet ist, dass er um einen Rand eines Zaunpfostens herum greifen kann.

9. Zaunmattenverbinder (10) nach einem der vorigen Ansprüche,
bei welchem das zweite Klemmelement (14) relativ zum ersten Klemmelement (12) um 90° drehbar ist.

10. Zaunmattenverbinder (10) nach einem der Ansprüche 1-8,
bei welchem das zweite Klemmelement (14) relativ zum ersten Klemmelement (12) um 180° drehbar ist.

11. Zaunmattenverbinder (10) nach einem der vorigen Ansprüche,
bei welchem der Zaunmattenverbinder (10) ein Drehbegrenzungselement umfasst, um die Drehung des zweiten Klemmelements (14) relativ zum ersten Klemmelement (12) zu begrenzen.

12. Zaunmattenverbinder (10) nach einem der vorigen Ansprüche,
bei welchem die Anfangsdrehung einer Gewindewelle (16) im Anfang bewirkt, dass das zweite Klemmelement (14) relativ zum ersten Klemmelement (12) dreht und diese Drehung bewirkt, dass das zweite Klemmelement (14) sich in paralleler Orientierung mit dem ersten Klemmelement (12) ausrichtet und die weitere Drehung der Gewindewelle (16) die Bewegung des zweiten Klemmelements (14) in Richtung des ersten Klemmelements (12) bewirkt.

13. Zaunmattenverbinder (10) nach einem der vorigen Ansprüche,
bei welchem der Zaunmattenverbinder (10) ein Vorspannmittel (66) umfasst, um das erste Klemmelement (12) vom zweiten Klemmelement (14) weg vorzuspannen.

14. Zaunanordnung, umfassend eine erste Zaunmatte, eine zweite Zaunmatte und einen Zaunmattenverbinder (10), wobei der Zaunmattenverbinder (10) folgendes umfasst:
ein erstes Klemmelement (12);
ein zweites Klemmelement (14); und
ein Verbindungsmittel, welches ermöglicht, dass das erste Klemmelement (12) und das zweite Klemmelement (14) aufeinander zu bewegt werden können, um zwei benachbarte Zaunmatten miteinander zu verklemmen, und voneinander weg bewegt werden können, um den Zaunmattenverbinder (10) von benachbarten Zaunmatten zu lösen, wobei das Verbindungsmittel das erste Klemmelement (12) mit dem zweiten Klemmelement (14) verbindet und das Verbindungsmittel ein Begrenzungsmittel umfasst, um den Trennungsabstand zwischen dem ersten Klemmelement (12) und dem zweiten Klemmelement (14) zu begrenzen und wobei das Begrenzungsmittel verhindert, dass das erste Klemmelement (12) vom zweiten Klemmelement (14) gelöst wird, und der Zaunmattenverbinder (10) **dadurch gekennzeichnet ist, dass** er ein Befestigungsmittel umfasst, um den Zaunmattenverbinder (10) an wenigstens einer Zaunmatte anzubringen, während sich der Zaunmatten-verbinder (10) in einem nicht geklemmten Zustand befindet.

15. Verfahren zum Befestigen einer ersten Zaunmatte mit einer benachbarten zweiten Zaunmatte, wobei das Verfahren das Klemmen eines Zaunmattenverbinders (10) zwischen der ersten Zaunmatte und der zweiten Zaunmatte umfasst, wobei der Zaunmattenverbinder (10) folgendes umfasst:
ein erstes Klemmelement (12);
ein zweites Klemmelement (14); und
ein Verbindungsmittel, welches ermöglicht, dass das erste Klemmelement (12) und das zweite Klemmelement (14) aufeinander zu bewegt werden können und voneinander weg bewegt werden können, um den Zaunmattenverbin-der (10) von benachbarten Zaunmatten zu lösen,
wobei das Verbindungsmittel das erste Klemmelement (12) mit dem zweiten Klemmelement (14) verbindet;
wobei das Verfahren **gekennzeichnet ist durch**:
Befestigen des Zaunmattenverbinders (10) an wenigstens einer Zaunmatte, während sich der Zaunmattenverbinder (10) in einem nicht geklemmten Zustand befindet;
Bewegen des ersten Klemmelements (12) in Richtung des zweiten Klemmelements (14) des Zaunmattenverbinders (10), um zwei benachbarte Zaunmatten miteinander zu verklemmen; und
Begrenzen des Trennabstandes zwischen dem ersten Klemmelement (12) und dem zweiten Klemmelement (14) und Vermeiden der Trennung des ersten Klemmelements (12) vom zweiten Klemmelement (14).

## Revendications

1. Coupleur de panneau de clôture (10) comprenant :
un premier élément de serrage (12) ;
un second élément de serrage (14) ; et
un moyen de liaison pour permettre au premier élément de serrage (12) et au second élément de serrage (14) d'être déplacés l'un vers l'autre pour serrer deux panneaux de clôture adjacents l'un à l'autre et d'être déplacés à l'écart l'un de l'autre pour libérer le coupleur de panneau de clôture (10) des panneaux de clôture adjacents,
le moyen de liaison reliant le premier élément de serrage (12) au second élément de serrage (14) et le moyen de liaison comprenant un moyen de limitation pour limiter la distance de séparation entre le premier élément de serrage (12) et le second élément de serrage (14), et le moyen de limitation empêchant le détachement du premier élément de serrage (12) vis-à-vis du second élément de serrage (14), et **caractérisé par le fait que** :
le coupleur de panneau de clôture (10) comprend un moyen de fixation afin de fixer le coupleur de panneau de clôture (10) à au moins un panneau de clôture tandis que le coupleur de panneau de clôture (10) est dans une configuration non serrée.

2. Coupleur de panneau de clôture (10) selon la revendication 1, dans lequel le moyen de liaison comprend une tige (16) et un élément d'engagement correspondant (18), et dans lequel l'élément d'engagement (18) est relativement mobile le long de la tige (16) pour ajuster la distance de séparation entre le premier élément de serrage (12) et le second élément de serrage (14), et le moyen de limitation empêchant le mouvement de l'élément d'engagement (18) le long de la tige (16) dans une position prédéterminée qui se trouve à la distance de séparation maximale, et position dans laquelle le premier élément de serrage (12) est encore fixé et relié au second élément de serrage (14).

3. Coupleur de panneau de clôture (10) selon la revendication 1 ou la revendication 2, dans lequel le premier élément de serrage (12) est mobile par rapport au second élément de serrage (14) et le premier élément de serrage (12) est mobile vers le second élément de serrage (14) pour déplacer le coupleur de panneau de clôture (10) d'une configuration libérée à une configuration serrée et le premier élément de serrage (12) est mobile à l'opposé du second élément de serrage (14) pour déplacer le coupleur de clôture (10) d'une configuration serrée à une configuration libérée ou non serrée, et dans lequel le moyen de limitation définit une distance maximale sur laquelle le premier élément de serrage (12) est mobile à l'opposé du second élément de serrage (14).

4. Coupleur de panneau de clôture (10) selon l'une quelconque des revendications précédentes, dans lequel le moyen de liaison comprend une tige filetée (16) comprenant une tête inviolable apte à être engagée (17).

5. Coupleur de panneau de clôture (10) selon la revendication 4, dans lequel le moyen de liaison comprend un élément d'engagement fileté comprenant un élément fileté femelle (18) pour un engagement avec la tige filetée (16), et dans lequel l'élément d'engagement femelle (18) est dissimulé à l'intérieur du second élément de serrage (14).

6. Coupleur de panneau de clôture (10) selon l'une quelconque des revendications précédentes, dans lequel le coupleur de panneau de clôture (10) comprend un moyen de fixation afin de fixer le coupleur de panneau de clôture (10) à deux panneaux de clôture tandis que le coupleur de panneau de clôture (10) est dans une configuration non serrée.

7. Coupleur de panneau de clôture (10) selon l'une quelconque des revendications précédentes, dans lequel le moyen de fixation comprend un moyen magnétique (30) .

8. Coupleur de panneau de clôture (10) selon l'une quelconque des revendications précédentes, dans lequel le moyen de fixation comprend une partie conformée de l'élément de serrage (12, 14) qui est agencée pour une saisie autour d'une périphérie d'un poteau de clôture.

9. Coupleur de panneau de clôture (10) selon l'une quelconque des revendications précédentes, dans lequel le second élément de serrage (14) est apte à tourner de 90° par rapport au premier élément de serrage (12).

10. Coupleur de panneau de clôture (10) selon l'une quelconque des revendications 1 à 8, dans lequel le second élément de serrage (14) est apte à tourner de 180° par rapport au premier élément de serrage (12).

11. Coupleur de panneau de clôture (10) selon l'une quelconque des revendications précédentes, dans lequel le coupleur de panneau de clôture (10) comprend un organe de limitation de rotation pour limiter la rotation du second élément de serrage (14) par rapport au premier élément de serrage (12).

12. Coupleur de panneau de clôture (10) selon l'une quelconque des revendications précédentes, dans lequel la rotation initiale d'une tige filetée (16) amène initialement le second élément de serrage (14) à tourner par rapport au premier élément de serrage (12) et cette rotation amène le second élément de serrage (14) à s'aligner dans une orientation parallèle avec le premier élément de serrage (12), et la rotation ultérieure de la tige filetée (16) entraîne le mouvement du second élément de serrage (14) vers le premier élément de serrage (12).

13. Coupleur de panneau de clôture (10) selon l'une quelconque des revendications précédentes, dans lequel le coupleur de panneau de clôture (10) comprend un moyen de sollicitation (66) pour solliciter le premier élément de serrage (12) à l'opposé du second élément de serrage (14).

14. Ensemble clôture comprenant un premier panneau de clôture, un second panneau de clôture et un coupleur de panneau de clôture (10), le coupleur de panneau de clôture (10) comprenant :
un premier élément de serrage (12) ;
un second élément de serrage (14) ; et
un moyen de liaison pour permettre au premier élément de serrage (12) et au second élément de serrage (14) d'être déplacés l'un vers l'autre pour serrer les deux panneaux de clôture adjacents l'un à l'autre et d'être déplacés à l'écart l'un de l'autre pour libérer le coupleur de panneau de clôture (10) des panneaux de clôture adjacents,
le moyen de liaison reliant le premier élément de serrage (12) au second élément de serrage (14) et le moyen de liaison comprenant un moyen de limitation pour limiter la distance de séparation entre le premier élément de serrage (12) et le second élément de serrage (14), et le moyen de limitation empêchant la séparation du premier élément de serrage (12) vis-à-vis du second élément de serrage (14), et **caractérisé par le fait que** :
le coupleur de panneau de clôture (10) comprend un moyen de fixation afin de fixer le coupleur de panneau de clôture (10) à au moins un panneau de clôture tandis que le coupleur de panneau de clôture (10) est dans une configuration non serrée.

15. Procédé de fixation d'un premier panneau de clôture à un second panneau de clôture adjacent, le procédé comprenant serrer un coupleur de panneau de clôture (10) entre le premier panneau de clôture et le second panneau de clôture, le coupleur de panneau de clôture (10) comprenant :
un premier élément de serrage (12) ;
un second élément de serrage (14) ; et
un moyen de liaison pour permettre au premier élément de serrage (12) et au second élément de serrage (14) d'être déplacés l'un vers l'autre et d'être déplacés à l'écart l'un de l'autre pour libérer le coupleur de panneau de clôture (10) des panneaux de clôture adjacents,
le moyen de liaison reliant le premier élément de serrage (12) au second élément de serrage (14) ;
le procédé étant **caractérisé par** :
fixer le coupleur de panneau de clôture (10) à au moins un panneau de clôture tandis que le coupleur de panneau de clôture (10) est dans une configuration non serrée ;
déplacer le premier élément de serrage (12) vers le second élément de serrage (14) du coupleur de panneau de clôture (10) afin de serrer deux panneaux de clôture adjacents l'un à l'autre ; et
limiter la distance de séparation entre le premier élément de serrage (12) et le second élément de serrage (14), et empêcher la séparation du premier élément de serrage (12) vis-à-vis du second élément de serrage (14) .
